# EUROPÄISCHE PATENTSCHRIFT

(11) **EP 0 503 265 B1**
(45) Veröffentlichungstag und Bekanntmachung des Hinweises auf die Patenterteilung: **14.05.1997**
(21) Anmeldenummer: 92101814.9
(22) Anmeldetag: 04.02.1992
(51) Int. Cl.: F24D 19/10, G05D 23/19, G05B 19/10, G04G 15/00

(54) **Eingabeeinrichtung für einen programmierbaren Heizungsregler**
Input device for a programmable heating controller
Unité d'entrée de données pour un régulateur de chauffage programmable

(30) Priorität: 04.02.1991 AT 227/91
(43) Veröffentlichungstag der Anmeldung: 16.09.1992
(73) Patentinhaber: Joh. Vaillant GmbH u. Co., D-42810 Remscheid (DE); n.v. Vaillant s.a., B-1620 Drogenbos (BE); VAILLANT S.A.R.L, 94045 Créteil Cedex (FR); VAILLANT Ges.m.b.H, 1231 Wien (AT); Vaillant Ltd., Rochester Kent ME2 4EZ (GB); Vaillant B.V., 1100 DT Amsterdam (NL); Vaillant GmbH, CH-8953 Dietikon 1 (CH)
(72) Erfinder: Jorzyk, Lutz, W-5630 Remscheid 1 (DE); Taag, Jürgen, W-5630 Remscheid 1 (DE); Thomas, Rolf, W-5632 Wermelskirchen 2 (DE)
(74) Vertreter: Heim, Johann-Ludwig, Dipl.-Ing.

(56) Entgegenhaltungen:
- EP-A- 0 092 211
- EP-A- 0 339 373
- DE-A- 3 435 383
- DE-A- 3 502 874
- GB-A- 2 054 098
- GB-A- 2 123 175
- GB-A- 2 123 594
- GB-A- 2 138 967
- GB-A- 2 146 794

## Beschreibung

Die Erfindung bezieht sich auf eine Heizeinrichtung gemäß dem Oberbegriff des Patentanspruches.

Bei bekannten derartigen Einrichtungen ist durch die Prozessoreinheit eine bestimmte Reihenfolge, in der die Eingabe von Werten erfolgen muß, festgelegt. Da bei Heizeinrichtungen eine relativ große Anzahl von verschiedenen Werten einzugeben ist, bedeutet dies, daß bei einer Änderung auch nur eines Wertes alle anderen Werte aufgerufen und bestätigt werden müssen. Außerdem ist es bei Heizeinrichtungen, die im wesentlichen von Laien betrieben werden, für diese in aller Regel schwer einzusehen, daß zur Änderung nur eines Wertes alle anderen ebenfalls aufgerufen werden müssen.

Die DE-A-3 435 383 und GB-A-2 123 594 beschreiben Schaltuhren für Zentralheizungskessel.

Ziel der Erfindung ist es, die erwähnten Nachteile zu vermeiden und eine Einrichtung der eingangs erwähnten Art vorzuschlagen, bei der eine einfache Änderung von einzelnen Werten möglich ist.

Erfindungsgemäß wird dies durch die Merkmale des Patentanspruches erreicht.

Auf diese Weise ist es möglich, zur Änderung eines Wertes allein den jeweils zugehörigen Eingangskreis zu aktivieren und den entsprechenden Wert zu ändern.

Durch diese Maßnahmen wird eine sehr einfache und übersichtliche Bedienung der Einrichtung ermöglicht.

Die Erfindung wird nun anhand der Figuren 1 bis 5 der Zeichnungen näher erläutert.

Dabei zeigen:
Figur 1 eine Heizanlage,
Figur 2 eine Ansicht eines Bedienungspaneels einer erfindungsgemäßen Eingabeeinrichtung,
Figuren 3 und 4 Blockschaltbilder von Details erfindungsgemäßer Einrichtungen und
Figur 5 eine Matrix.

In allen Figuren bedeuten gleiche Bezugszeichen jeweils die gleichen Einzelheiten.

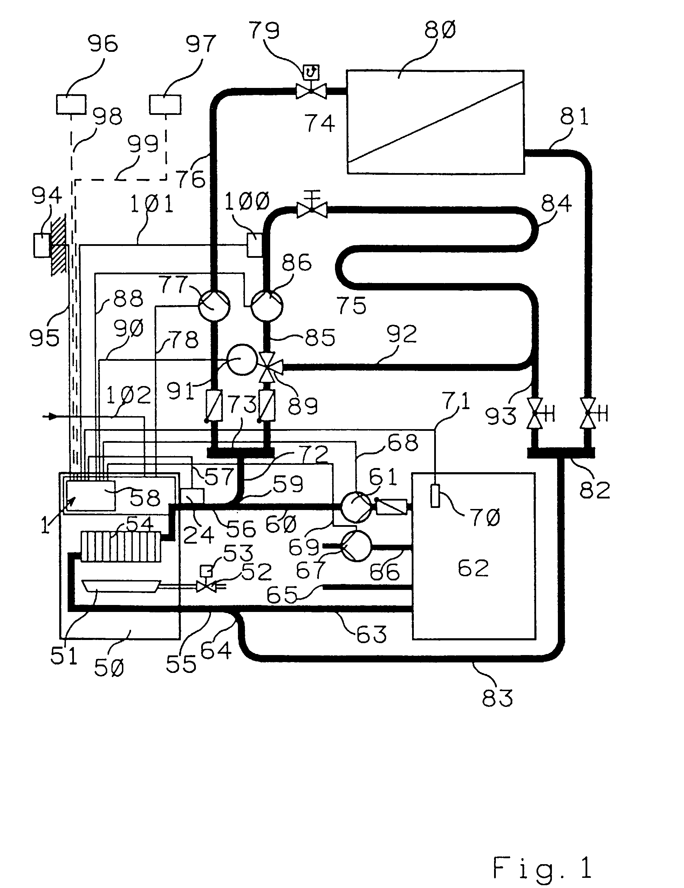

Eine Heizungsanlage gemäß Figur 1 weist als Wärmequelle einen gas- oder ölbeheizten Kessel 50 auf, der von einem Brenner 51 gespeist wird, der über ein Gas- oder Öl-Magnetventil 52 mit Brennstoff versorgbar ist, dessen Spule mit 53 bezeichnet ist.

Weiterhin weist der Kessel einen Wärmetauscher-Gußblock 54 auf, der mit einer Kesselrücklaufleitung 55 und einer Kesselvorlaufleitung 56 verbunden ist, wobei an letzterer ein Kessel-Vorlauftemperaturfühler 24 angeordnet ist, der über eine Leitung 57 mit einer Regeleinrichtung 58 verbunden ist.

In der Kesselvorlaufleitung 56 ist eine Verzweigungsstelle 59 vorgesehen, von der eine erste Zweigleitung 60 über eine Speicherladepumpe 61 zu einem Brauchwasserspeicher 62 führt, dessen Rücklaufleitung 63 in einer Einmündungsstelle 64 mit der Kesselrücklaufleitung 55 verbunden ist. Innerhalb des Brauchwasserspeichers ist ein nicht dargestelltes Brauchwasservolumen gespeichert, das vom Kessel aufgeheizten über die Leitungen 60 und 63 zugeführten Heizwasser erwärmt wird. Das Brauchwasser ist über eine Kaltwasser-Zulaufleitung 65 mit dem speisenden Netz verbunden und über eine Brauchwasser-Vorlaufleitung 66, in der eine Zirkulationspumpe 67 angeordnet ist, mit einer Vielzahl von nicht weiter dargestellten Zapfstellen verbunden. Alle Zapfstellen sind von einer nicht dargestellten Zirkulationsleitung überbrückt. Die nicht dargestellten Elektromotoren der Pumpen 61 und 67 sind über Leitungen 68 und 69 vom Regler 58 ansteuerbar. Im Brauchwasservolumen des Brauchwasserspeichers 62 ist ein Temperaturfühler 70 angeordnet, der über eine Leitung 71 mit dem Regler 58 verbunden ist.

Von der Abzweigungsstelle 59 führt eine weitere Zweigleitung 72 zu einem Verteiler 73, an den zwei Heizkreise 74 und 75 angeschlossen sind. Der Heizkreis 74 besteht aus einer Heizkreis-Vorlaufleitung 76, in der eine Umwälzpumpe 77 angeordnet ist, die über eine Leitung 78 mit dem Regler 58 verbunden ist. Die Heizkreis-Vorlaufleitung 76 führt über eine Vielzahl von hydraulisch parallel geschalteten Thermostatventilen 79 zu einer ebenso großen Vielzahl von Radiatoren oder Konvektoren 80, die über eine gemeinsame Rücklaufleitung 81 mit einem Rücklaufverteiler 82 verbunden ist, dessen Ausgangsleitung 83 zur Einmündungsstelle 64 führt. Bei dem Heizkreis 74 handelt es sich um einen sogenannten Hochtemperatur-Heizkreis. Im Gegensatz dazu behandelt der Heizkreis 75 einen Niedertemperatur-Heizkreis, er weist als wesentliches Element eine Fußboden-Heizschlange 84 auf, die über ein Absperrventil mit einer weiteren Heizkreis-Vorlaufleitung 85 verbunden ist, in der eine zugehörige Umwälzpumpe 86 angeordnet ist, die mit einer Leitung 88 an den Regler 58 angeschlossen ist. Zwischen Verteiler 73 und Umwälzpumpe 86 befindet sich ein Mischventil 89, das von einem über eine Leitung 90 vom Regler 58 ansteuerbaren Motor 91 beherrscht ist. Das Mischventil gestattet es, eine Bypassleitung 92 zur Rohrschlange 84 zu schalten. Die Rohrschlange 84 ist über eine Heizzweig-Rücklaufleitung 93 mit dem Verteiler 82 verbunden.

Der Regler 58 weist eine Vielzahl von Eingängen auf: So ist zunächst ein Außentemperaturfühler 94 vorgesehen, der über eine Leitung 95 mit dem Regler 58 verbunden ist. Weiterhin sind zwei Fernbedienungselemente 96 und 97 vorgesehen, die über entsprechende Leitungen 98 und 99 mit dem Regler verbunden sein können. Der Heizkreis-Vorlaufleitung 85 ist ein Temperaturfühler 100 zugeordnet, der über die Leitung 101 mit dem Regler 58 verbunden ist. Der Regler wird aus einem Netz über eine Leitung 102 mit Netzspannung gespeist.

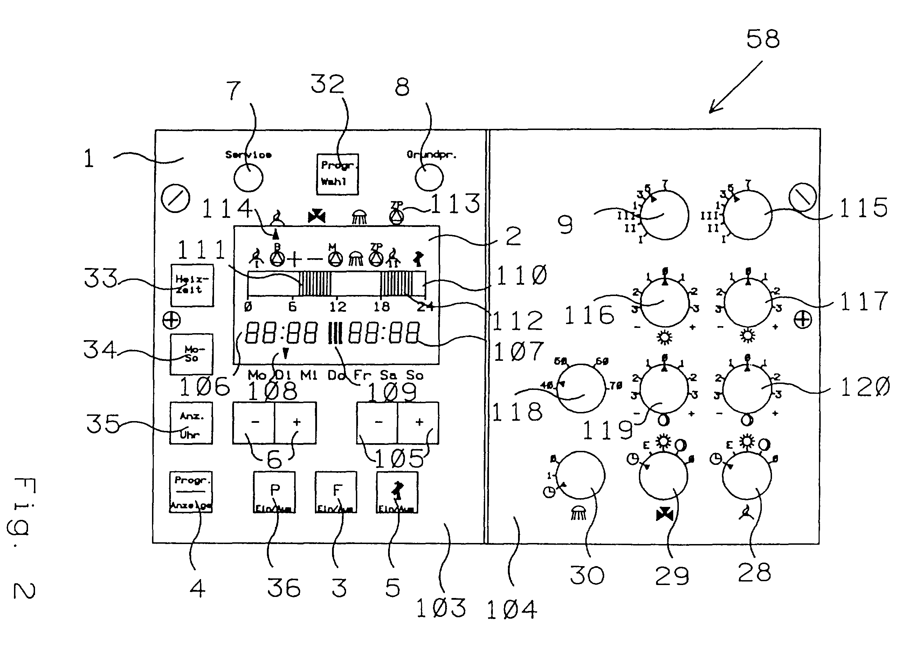

Der Regler 58 weist ein Bedienungspaneel 1, vergleiche Figur 2, auf. Dieses Bedienungspaneel ist in etwa zweigeteilt, seine linke Hälfte 103 weist eine Vielzahl von Drucktasten und ein Anzeigefeld 2 auf, seine rechte Hälfte 104 eine Vielzahl von knopfbetätigten Einstellern. So ist eine erste Drucktaste 3 vorgesehen, mit der man ein Feiertagsprogramm (F) schalten kann, das bedeutet, daß zu einem bestimmten Werktag ein Sonntagsprogramm gefahren werden kann. Mit einer weiteren Taste 4 kann vom Anzeigemodus in ein Programmiermodus umgeschaltet werden, das heißt, die gerade angezeigten Zeiten oder Zustände können durch Drücken dieser Taste und anschließend einer weiteren Taste geändert werden. Mittels der Taste 5 kann ein sogenanntes Schornsteinfeger-Programm gefahren werden, das heißt, ein bestimmter Zustand kann für eine bestimmte Zeit unter Unterdrückung des gerade laufenden Programms gefahren werden, im wesentlichen ein Vollastprogramm für eine Zeit von etwa 15 Minuten. Die beiden paarweise vorgesehenen Drucktasten 6 und 105 dienen dazu, angezeigte Zahlenwerte entweder in positiver oder negativer Richtung zu ändern. So dient das Tastenpaar 6 dazu, die im Anzeigefeld erscheinenden Ziffern für den Beginn und das Ende eines Zeitraums zu ändern. Das Tastenpaar 6 ändert den linken Ziffernblock 106, das Tastenpaar 105 den rechten Ziffernblock 107 im Anzeigefeld 2. Eine weitere Taste 35 ist der im Regler 58 eingebauten Digitaluhr zugeordnet. Mit Betätigen der Taste 35 kann die Uhrzeit verstellt werden, beispielsweise bei Änderung der Sommerzeit oder bei der Erstinbetriebnahme. Das Betätigen der Taste 35 führt dazu, daß statt der beiden Ziffernblöcke 106 und 107 nur noch die laufende Uhrzeit angezeigt wird. Das Tastenpaar 6 dient dann dazu, die Stunde der laufenden Uhrzeit zu verstellen, während das Tastenpaar 105 die Minuten der laufenden Uhrzeit zu verstellen im Stande ist. Eine weitere Taste 34 dient dazu, den laufenden Wochentag im Programm dem Ist-Wochentag zuzuordnen, eine entsprechende Marke 108 springt entsprechend weiter, wenn die Taste 34 gedrückt wird. Die Marke 108 ist den einzelnen Wochentagen zugeordnet (Mo, Di, Mi, Do, Fr, Sa, So).

Mit der weiteren Taste 33 können Heizzeiten vorgegeben werden. Wird die Taste zum ersten Mal gedrückt, wird die erste Heizzeit in der Anzeigevorrichtung 2 angezeigt, wobei einer der drei Balken 109 erscheint. Wird die Taste 33 zum zweiten Mal gedrückt, erscheinen zwei Balken im Feld 109 und die zweite Heizzeit. Schließlich kann beim dritten Drücken der Taste 33 eine dritte Heizzeit angezeigt werden. Bei viermaligem Drücken der Taste 33 springt die Anzeige zurück auf die erste Heizzeit.

Der Heizzeit sind zu Beginn und zum Ende die Zahlengruppen 106, 107 zugeordnet, zusätzlich werden in einem Balkendiagramm 110, das von 0.00 Uhr bis 24.00 Uhr entsprechend der Ziffern 0, 6, 12, 18 und 24 reicht, die einzelnen Heizzeiten durch Schraffuren 111 und 112 dargestellt. Gemäß der Anzeige sind zwei Heizzeiten vorgesehen, von denen die erste etwa von 7.00 Uhr bis 11.00 Uhr und die zweite von 18.00 Uhr bis 22.00 Uhr reicht. Eine dritte Heizzeit ist nicht dargestellt.

Eine nächste Taste 7 dient dazu, den Anzeigebetrieb umzuschalten auf Servicebetrieb, was bedeutet, daß Ist-Temperaturen der Fühler, wie zum Beispiel von 70, 94, 96, 97 und 100, und Einstellungen, beispielsweise von 96, 97, oder von den Knöpfen des rechten Feldes 104 vorgegebene Soll-Werte nacheinander zur Anzeige gebracht werden können.

Mit der Programmwahltaste 32 kann ein bestimmtes Programm einem Heizkreis, zum Beispiel dem Heizkreis 74 oder 75, oder der Aufladung des Brauchwasserspeichers 62 oder dem Betrieb der Zirkulationspumpe 67 zugeordnet werden. Die einzelnen Anzeigen dafür sind auf einem Band 113 oberhalb des Balkendiagramms 110 vorgesehen. Das Betätigen der Programmwahltaste geschieht zyklisch, bei den vier möglichen eben erwähnten Heizkreisen beziehungsweise Verbrauchern kann somit dem Symbol des Brenners der (nicht von einem Mischer beeinflußte und daher direkt dem Brenner zuzuordnete) Heizkreis 74 programmiert werden, bei Schaltung der Programmwahltaste auf den Mischer kann der über den Mischer 89 beherrschte weitere Heizkreis 75 programmiert werden, beim Erscheinen des Duschsymbols wird der Brauchwasserspeicher 62 in seiner Aufladung beeinflußt, und bei Wahl des Zirkulationspumpenzeichens wird das Zeitprogramm für die Zirkulationspumpe 67 aufgerufen und kann geändert werden. Den einzelnen Symbolen 113 ist eine einzelne jeweils nur einem Zeichen gehörige Markierung 114 zugeordnet.

Mit der Drucktaste 8 kann ein sogenanntes Grundprogramm aktiviert werden. Dies ist eine werkseitige Einstellung von Zeit- und Temperaturwerten, die mutmaßlich in etwa 2/3 aller Fälle nicht falsch liegt.

Mit der Taste 36 kann ein sogenanntes Partyprogramm eingegeben werden, das heißt, daß eine Absenkung aufgehoben wird und daß die Heizungsanlage mit Vollasten weiterfährt, bis in einem vorgegebenen Zeitpunkt ein Aufheizzeitpunkt kommt. Das heißt, eine gerade laufende Absenkung oder eine Absenkung ab dem Betätigen der Taste 36 bis zum nächsten Aufheizzeitpunkt wird unterdrückt.

Im rechten Feld 104 des Bedienungspaneels 1 sind eine Vielzahl von Potentiometern zugeordneten Drehknöpfen 9, 115, 116, 117, 118, 119 und 120 zugeordnet. Weiterhin sind drei Drehschalter 28, 29 und 30 vorgesehen. Mit dem Drehknopf 9 kann eine Heizkurve für den Regler 58 vorgegeben werden. Da zwei Heizkreise 74 und 75 vorgesehen sind, ist der Drehknopf 9 der Heizkurve für den Heizkreis 75 und der Drehknopf 115 für die Heizkurve zum Heizkreis 74 zugeordnet. Bei entsprechend mehr Heizkreisen wären entsprechend mehr Heizkurveneinsteller vorhanden, oder ein einziger Heizkurvenversteller müßte über einen Umschalter den einzelnen Heizkreisen zugeordnet werden.

Mit den Drehknöpfen 116 und 117 werden Zuschlags- und Abzugswerte für die Soll-Werte für die beiden Heizkreise 74 und 75 eingestellt, das heißt, die Heizkurve wird parallel verschoben. Mit den Einstellern 119 und 120 können im Absenkbetrieb die Heizkurven für die beiden Heizkreise 74 und 75 parallel verschoben werden, wie eben beschrieben. Mit dem Einsteller 118 kann der Soll-Wert für die Temperatur des Brauchwassers im Brauchwasserspeicher 62 vorgegeben werden. Der Drehschalter 28 gestattet das Vorwählen einer Betriebsart für den Heizkreis 74, das heißt, er kann auf die Uhr geschaltet werden, auf ein Energiesparprogramm, das bewirkt, daß bei Absenkungszeiträumen sowohl auch die Pumpe stromlos geschaltet wird oder auf ein dauerndes Hochtemperaturprogramm oder ein dauerndes Niedertemperaturprogramm oder auf Aus. Das gleiche ist mit dem Einsteller 29 für den vom Mischer 89 beherrschten weiteren Heizkreis 75 möglich. Mit dem Einsteller 30 kann der Brauchwasserspeicher 62 entweder auf Uhrzeitprogramm geschaltet werden oder auf dauernd Ein oder dauernd Aus geschaltet werden. Bei dauernd Aus-Schaltung findet keine Aufladung des Brauchwassers statt und bei dauernd Ein wird diese laufend auf den Soll-Wert aufgeladen.

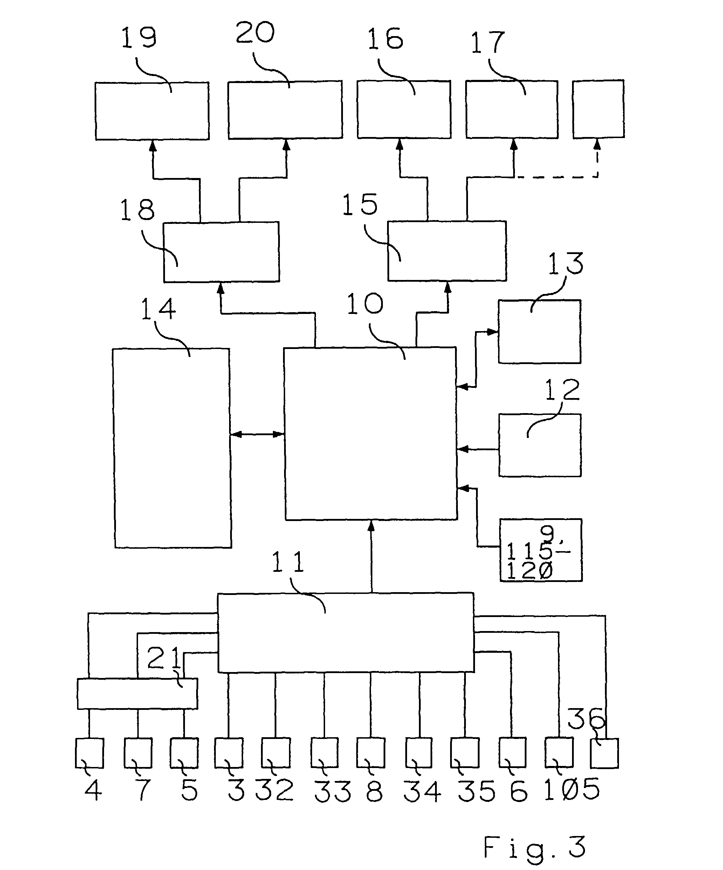

Das Blockschaltbild der Figur 3 zeigt die Zuordnung der einzelnen Tasten des Teils 103 beziehungsweise der Drehknöpfe und Drehschalter der rechten Hälfte 104 auf den Regler, wobei das Blockdiagramm einen Ausschnitt aus dem Regler darstellt. Nicht beschrieben bei dem Regler ist zum Beispiel die ganze Funktion der außentemperaturabhängigen Vorlauftemperaturregelung.

Aus der Figur 3 ist ersichtlich, daß die Tasten 3 bis 8 und 32 bis 36 sowie 105 auch auf eine Decodierlogik geschaltet sind, wobei die Tasten 4, 5 und 7 über ein Zeitglied 21 mit dieser Decodierlogik verbunden sind, das bedeutet, daß nur für die im Zeitglied einstellbare Zeit beim Betätigen der Tasten 4, 5 und 7 Vorgänge ausgelöst werden.

Die Decodierlogik 11 ist mit einem Mikroprozessor 10 verbunden, auf dem gleichermaßen die Knopfeinsteller 9 sowie 115 bis 120 geschaltet sind, weiterhin ist ein Zeitgeber 12 und ein Timer 13 auf den Mikroprozessor 10 geschaltet. Der Timer 12 wirkt als Oszillator, das heißt, betätigt den Prozessor taktweise laufend. Der Timer 13 hingegen gibt einstellbare Zeiträume vor. Weiterhin ist dem Mikroprozessor ein Speicher 14 zugeordnet, in dem Temperatur-Ist- und -Soll-Werte sowie Zeiten abgespeichert werden können.

Der Mikroprozessor 10 ist mit zwei Treibern 15 und 18 verbunden, an die die Ausgänge der zu betätigenden Einrichtungen der Heizungsanlage oder des Bedienpaneels angeschlossen sind. Dem Treiber 18 ist eine Programm- und eine Serviceanzeige 19 beziehungsweise 20 zugeordnet, die dem Anzeigefeld 2 zugeordnet sind. Mit 16 und 17 sind Teile der Heizungsanlage aktivier- und deaktivierbar, wie zum Beispiel kann 16 ein Relaisausgang für die Spule 53 des Gasmagnetventils 52 sein, und 17 kann ein Relais zum Inhalt haben, mit dem der Motor der Umwälzpumpe 61 ein- oder ausgeschaltet werden kann. Grundsätzlich ist ein solcher Ausgang 16 und 17 neben dem Brennstoffventil den vier Pumpen 61, 67, 77 und 86 zugeordnet, weiterhin dem Motor 91 des Mischventils 89.

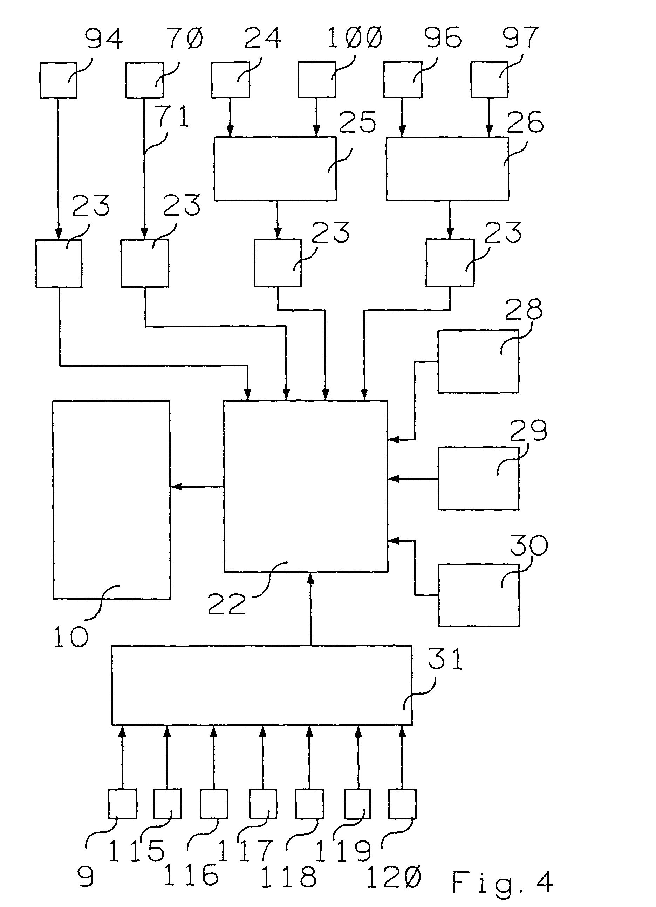

Anhand der Figur 4 soll nun erläutert werden, wie der Regler 58 in seinem Programm eingestellt wird. Es ist ersichtlich, daß die einzelnen Drehknöpfe 9 und 115 bis 120 über jeweilige Leitungen mit einem Multiplexer 31 verbunden ist, der über einen AD-Wandler 22 mit dem Mikroprozessor 10 in Verbindung steht. Die einzelnen Drehschalter 28 bis 30 sind auch auf den AD-Wandler 22 geschaltet. Der Außentemperaturfühler 94 ist über einen Verstärker 23 mit dem AD-Wandler 22 verbunden, der Brauchwasser-Temperaturfühler 70 über einen gleichartigen Verstärker 23. Die Temperaturfühler 24 und 100 sind über einen Multiplexer 25 und einen Verstärker 23 mit dem AD-Wandler 22 verbunden, und die Fernbedienungselemente 96 und 97 sind über einen weiteren Multiplexer 26 und einen weiteren Verstärker gleichermaßen mit dem AD-Wandler 22 verbunden. Somit können dem Mikroprozessor 10 die einzelnen möglichen Ist- und Soll-Werte vorgegeben werden.

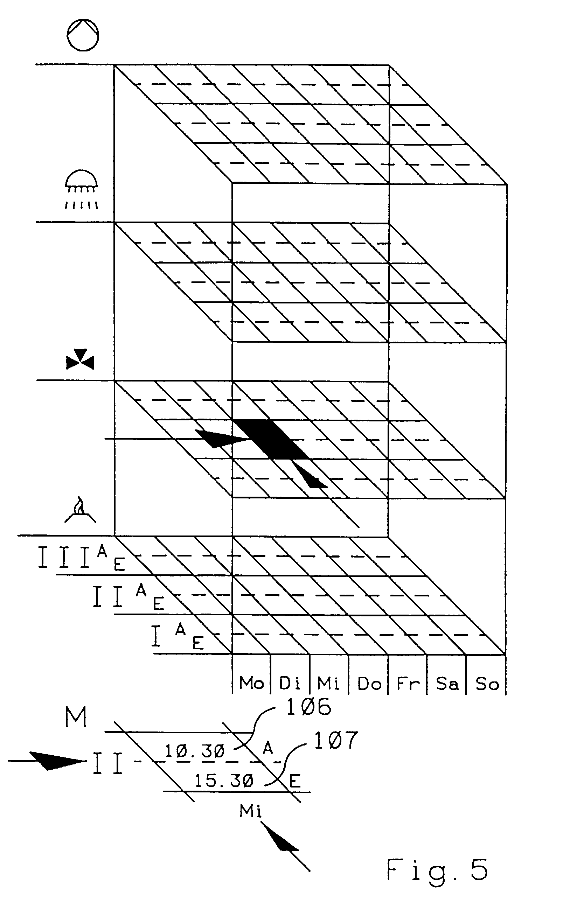

Der eigentliche Vorgang der Programmierung des Reglers 58 wird nun anhand der Figur 5 näher erläutert.

Die Figur 5 stellt eine Matrix dar, die zunächst aus vier horizontalen Ebenen besteht, die dieselben Betriebsarten zum Inhalt haben, wie sie mit dem Bezugszeichen 114 in Figur 2 eingeführt worden sind. Der unteren Ebene ist der nur vom Brenner 51 abhängige Heizkreis 74 zugeordnet, der zweiten Ebene der über den Mischer 89 abhängige weitere Heizkreis 75, der dritten Ebene der Ladezustand des Brauchwasserspeichers 62 und der vierten Ebene die Laufzeiten der Zirkulationspumpe 67. In der Abszisse sind den einzelnen Ebenen die Wochentage Montag bis Sonntag zugeordnet und in der Ordinate die Anfangs- und Endzeitpunkte von Programmschritten, das heißt, der Zuordnung bestimmter Temperaturwerte zu den einzelnen Heizkreisen.

Soll zum Beispiel für den Heizkreis 75, der von dem Mischer 89 abhängig ist, ein bestimmtes Heizprogramm zugeordnet werden, so muß zunächst einmal der Kreis selbst angewählt werden. Dieses Anwählen geschieht unabhängig davon, in welcher Ebene gerade programmiert wurde. Angewählt werden kann dieser Heizkreis durch Betätigen der Programmwahltaste 32, die so oft gedrückt werden muß, bis die Markierung 114 unter dem Mischersymbol zugeordnet ist. Anschließend muß der gewünschte Wochentag eingegeben werden, was durch Betätigen der Drucktaste 34 so oft geschieht, bis zum Beispiel der dargestellte Mittwoch angewählt ist, was bedeutet, daß die Markierung 108 dem Mittwoch (Mi)-Zeichen zugeordnet ist. Dann muß durch Betätigen der Drucktaste 33 der erste, zweite oder dritte Heizzyklus angewählt werden. In der dargestellten Auswahl ist der zweite Heizzyklus am Mittwoch im Heizkreis 75 programmierbar. In den beiden Feldern 106 und 107 werden nunmehr Beginn und Ende des zweiten Heizzyklus dieses Heizkreises angezeigt. Sollen diese Zeiten geändert werden, so wird die Taste 4 gedrückt, und es kann nunmehr im ersten Schritt der Beginn dieses Heizzyklus geendet werden, und zwar durch Drücken des Tastenpaares 6 und anschließend durch Drücken des Tastenpaares 105 das Ende dieses Heizzyklus, in dem Moment, in dem die Tasten 6 beziehungsweise 5 gedrückt werden. Da der Drucktaste 4 das Zeitglied 21 zugeordnet ist, dessen eingestellte Zeit fünfzehn Minuten beträgt, wird eine andere Anzeige erst nach Ablauf dieser Zeit selbsttätig eingestellt. Soll beispielsweise nach Vornahme der eben genannten Programmierung die Zirkulationspumpe im dritten Heizzyklus am Donnerstag geändert werden, muß anschließend durch Betätigen der Taste 32 die Marke 114 dem Zirkulationspumpensymbol zugeordnet werden. Das bedeutet ein Springen in der Matrix auf die höchste Ebene. Anschließend muß der gewünschte Tag, Donnerstag, durch entsprechendes Betätigen der Drucktaste 34 (einmal) vorgegeben werden. Dann muß durch Betätigen der Taste 33 um einen Impuls vom zweiten auf den dritten Heizzyklus übergegangen werden. Damit wäre die Programmierstellung für die Zirkulationspumpe erreicht, und es muß nun der dritte Laufzeitzyklus für die Zirkulationspumpe eingegeben werden, beispielsweise, um nach einer späten Theatervorstellung noch Duschen zu können, gibt man als Beginn die Zeit 22.00 und als Ende die Zeit 23.15 Uhr ein.

Wesentlich ist, daß auch zunächst bei Vornahme eines weiteres Programmierschritts der Heizzyklus ausgewählt werden kann, dann der Wochentag und zuletzt die Ebene. Es ist nicht notwendig, hier in einer bestimmten Reihenfolge vorzugehen. Dies ist gerade der Vorteil gegenüber der Serienprogrammierung beim Stand der Technik.

## Patentansprüche

1. Heizeinrichtung für unterschiedlich zu beheizende Verbraucher, wie Heizkreise, Brauchwasserspeicher und den Lauf einer Zirkulationspumpe, mit einem Zeitprogramm-Schaltgerät, das ein Anzeigefeld, eine Prozessoreinheit und Eingabeelemente zur Eingabe von Zeitprogrammdaten, Temperatur-Soll-Werten, Wochentagen, Betriebsparametern und dergleichen aufweist, wobei für jede mögliche Eingabe voneinander getrennte beziehungsweise voneinander unabhängige Eingabeschaltkreise vorgesehen sind und wobei in dem Anzeigefeld (2) sowohl der Beginn wie das Ende eines den Zeitprogrammdaten entsprechenden Zeitprogrammschrittes angezeigt ist und durch zugeordnete Tasten (6, 105) eine Variation von Beginn und Ende des Zeitprogrammschrittes möglich ist, **dadurch gekennzeichnet,** daß jeder Zeitprogrammschritt als Tripelpunkt in einer dreidimensionalen Matrix, bestehend aus den Koordinaten für Wochentag, Zeitprogrammdaten und zu beheizendem Verbraucher, definiert ist, wobei der Tripelpunkt durch inkrementale Änderung eines beliebigen Koordinatenwertes durch Betätigen von Tasten (4, 32, 33, 34) verstellt und die Stellung zur Anzeige gebracht werden kann,
indem
- durch Betätigen der den einzelnen Verbrauchern zugeordneten Taste (32) zyklisch von einem zum anderen Verbraucher umgeschaltet wird und die Umschaltposition durch eine einem Symbol (113) des Verbrauchers zugewandte Marke (114) auf dem Anzeigefeld (2) sichtbar ist,
- durch Betätigen der den, insbesondere drei, Programmschritten innerhalb eines 24-Stunden-Zeitraumes zugeordneten Taste (33) zyklisch von einem zum anderen Programmschritt umgeschaltet wird und die Umschaltposition durch ein Symbol, insbesondere eine römische Zahl (109), auf dem Anzeigefeld (2) sichtbar ist,
- durch Betätigen der den einzelnen Wochentagen zugeordneten Taste (34) zyklisch von einem zum anderen Wochentag umgeschaltet wird und die Umschaltposition durch eine einem Symbol, insbesondere Buchstabensymbol, des jeweiligen Wochentages zugewandte Marke (108) auf dem im Anzeigefeld (2) sichtbar ist,
wobei
- durch Betätigen einer weiteren Taste (4) eine Variation des Beginns und des Endes des Zeitprogrammschrittes des gerade angewählten Tripelpunktes freigegeben wird.

## Claims

1. Heating device for different load circuits to be heated differently, such as heater circuits, service water storage tanks and the operation of a circulation pump, with a time program controller possessing a display panel, a processor unit and input elements for the input of time program data, temperature setpoint values, days of the week, operation parameters and the like, providing separate or mutually independent input circuits for each possible input and arranged in such a way that the display panel (2) shows both the beginning and the end of a time program step corresponding to the time program data and that associated keys (6, 105) permit the variation of such beginning and end of the time program step,
**characterized in that** each time program step is defined as a triple point in a three-dimensional matrix consisting of the coordinates for the day of the week, the time program data and the load circuit to be heated, with arrangements being made that, by incrementally altering any desired coordinate value by pressing associated keys (4, 32, 33, 34), the triple point is switched a step onward and the switch position is displayed -
in that,
- by actuating the key associated with the load circuits (key 32), the unit switches cyclically from one load circuit to the other, and the switching position is shown on the display panel (2) by an index mark (114) pointing to a symbol (113) denoting the load circuit concerned;
by actuating the key associated with the, especially three, program steps within a 24-hour time period (key 33), the unit switches cyclically from one program step to the other, and the switching position is shown on the display panel (2) by a symbol, especially a Roman figure (109);
by actuating the key associated with the different days of the week (key 34), the unit cyclically switches from one day of the week to the next, and the switching position is shown on the display panel (2) by an index mark (108) pointing to a symbol, especially a letter symbol, denoting the day of the week concerned;
with arrangements being further made that -
- by actuating a further key (4), a variation is enabled of the beginning and the end of the time program step of the triple point just selected.

## Revendications

1. Equipement de chauffage pour des récepteurs à chauffer suivant des modes différents, tels que des circuits de chauffage, chauffe-eau sanitaires à accumulation, et la marche d'une pompe de circulation, avec un ensemble opérateur qui comprend un panneau de visualisation, une unité processeur et des organes pour l'entrée de données de timing, consignes de température, jours de semaine, paramètres de fonctionnement et d'autres informations, des circuits séparés et indépendants entre eux pour chacune des différentes entrées étant prévus, et le panneau de visualisation (2) indiquant aussi bien le début que la fin de chaque action suivant les données de timing qu'il est possible de faire varier à l'aide de touches (6, 105) correspondantes, **équipement caractérisé par le fait** que chaque action est définie comme point triple dans une matrice tridimensionnelle se composant des coordonnées relatives aux jours de semaine, données de timing et récepteurs à chauffer, le point triple pouvant être varié par modification incrémentale d'une valeur de coordonnée quelconque à l'aide de touches (4, 32, 33, 34), avec affichage de la position,
moyennant
- la commande de la touche (32) attribuée aux différents récepteurs et permettant de passer successivement d'un récepteur à l'autre avec visualisation au panneau (2) de la position de commutation à l'aide d'une marque (114) attribuée à un symbole (113) du récepteur,
- la commande de la touche (33) attribuée aux différentes actions, notamment trois, durant 24 heures et permettant de passer successivement d'une action à l'autre avec visualisation au panneau (2) de la position de commutation par un symbole, notamment un chiffre romain (109),
- la commande de la touche (34) attribuée aux différents jours de semaine et permettant de passer successivement d'un jour à l'autre avec visualisation au panneau (2) de la position de commutation par une marque (108) attribuée à un symbole, notamment un symbole de lettre, du jour concerné,
- la commande d'une autre touche (4) autorisant la variation du début et de la fin d'une action du point triple choisi.
